# EUROPÄISCHE PATENTSCHRIFT

(11) **EP 1 095 961 B1**
(45) Veröffentlichungstag und Bekanntmachung des Hinweises auf die Patenterteilung: **23.03.2005**
(21) Anmeldenummer: 00122034.2
(22) Anmeldetag: 11.10.2000
(51) Int. Cl.: C08J 3/21, C08L 7/00, C08K 3/04

(54) **Verfahren zur Herstellung von Pulvern auf Basis von Naturkautschuk und Russ**
Process for preparing powders from natural rubber and carbon black
Procédé pour la préparation de poudres à base de caoutchouc naturel et noir de carbone

(30) Priorität: 28.10.1999 DE 19951977
(43) Veröffentlichungstag der Anmeldung: 02.05.2001
(73) Patentinhaber: PKU Pulverkautschuk Union GmbH, 45764 Marl (DE)
(72) Erfinder: Görl, Udo, Dr., 45657 Recklinghausen (DE); Stober, Reinhard, Dr., 63594 Hasselroth (DE); Lauer, Hartmut, 63628 Bad Soden Salmünster (DE); Ernst, Uwe, 45768 Marl (DE)

(56) Entgegenhaltungen:
- WO-A-99/51664
- WO-A-99/54397
- DE-A- 3 723 214
- US-A- 4 065 426

## Beschreibung

Die Erfindung betrifft ein Verfahren zur Herstellung von feinteiligen Kautschukpulvern auf der Basis Naturkautschuk (NR)/Russ durch Ausfällen aus wasserhaltigen Mischungen und die so hergestellten Pulver.

Naturkautschuk (NR) wird in der Regel, wie die meisten anderen Kautschukarten auch, in Form von Ballen in den Handel gebracht. Seine hohe Viskosität beruht zum einen auf dem hohen Molekulargewicht in der Molmassenverteilung und zum anderen auf einer ausgeprägten Kristallisationsneigung dieses Polymers. Beide Effekte werden durch die Biosynthese dieser Kautschukart hervorgerufen. Eine Weiterverarbeitung des normalerweise in Ballen vorliegenden NR's ist aufgrund der beschriebenen hohen Ausgangsviskosität nicht möglich. Der Kautschuk wird daher nach dem Stand der Technik mit hohem Energieaufwand im Innenmischer oder auf Walzen mechanisch abgebaut. Erst anschließend gelingt es, die weiteren Mischungsbestandteile, insbesondere die Füllstoffe, in den so abgebauten Kautschuk einzuarbeiten und zufriedenstellend zu verteilen bzw. zu dispergieren.

Aus dem Stand der Technik sind Bemühungen bekannt, diese Schwierigkeiten durch den Einsatz von feinteiligem Pulverkautschuk zu umgehen.

Die Herstellung von Pulverkautschuk erfolgt nach dem Stand der Technik durch Fällung aus einem Gemisch einer Füllstoff-Suspension (z.B. Ruß oder Kieselsäure) und einer Kautschuk-Latex-Emulsion bzw. einer Kautschuklösung durch pH-Wert-Absenkung unter Zuhilfenahme entsprechender Brönsted- bzw. Lewissäuren (DE-PS 37 23 214, DE-PS 28 22 148).

Dabei werden bevorzugt synthetisch hergestellte Polymere wie z. B. E-SBR oder BR eingesetzt, die mit Mooney-Viskositäten von ca. 50 Punkten angeliefert werden. Dies erleichtert die Einarbeitung von Füllstoffen und weiteren notwendigen Bestandteilen.

Naturkautschuk-Latex, wie ihn die Pflanze vorgibt, besitzt die Anfangsviskosität ML 1+4 von etwa 60 bis 80 Mooney-Punkten, die aber dann innerhalb kurzer Zeit auf 80 bis 120 Mooney-Punkten ansteigt. Für die Verwendung von NR-Latex als Ausgangsstoff zur Herstellung von NR/Ruß-Pulverkautschuk stellt dies ein Problem dar, da die Viskosität des Latex für die Herstellung eines Pulverkautschuks eigentlich zu hoch liegt und nicht auf mechanischem Weg reduziert werden kann.

Während es üblich ist, den Ballenkautschuk in maschinell und energetisch aufwendigen Schritten mechanisch abzubauen, ist der chemische Abbau wegen der nachteiligen Eigenschaften der Weiterverarbeitungsprodukten umstritten.

In der Patentschrift GB-PS 749 955 wird ein Verfahren beschrieben, bei dem der Latex bei 40-60°C und einem pH-Wert von 3-4 unter Zusatz von Alkalichlorit und Formaldehyd abgebaut wird. Ein wesentlicher Nachteil dieses Verfahrens liegt darin, daß der Latex des Naturkautschuks anschließend nicht mehr in alkalischer Form (pH 9-10,5) vorliegt.

Aus der Literatur (Ind. Eng. Chem., Vol 43 (1951)475) ist ein weiteres Verfahren zum Molekulargewichtsabbau bekannt, bei dem der Latex in seiner alkalischen Form erhalten bleibt. Als Abbaumittel dient vornehmlich reiner Sauerstoff. Es hat sich aber gezeigt, daß ein so abgebauter NR-Latex nicht oder nur unter Einsatz relativ hoher Füllstoffmengen zur Herstellung von rieselfähigen, füllstoffhaltigen Naturkautschukpulvern geeignet ist.

Im Stand der Technik findet sich ein weiteres Verfahren zur Herstellung von Pulverkautschukbatches. Man setzt dabei ein Sauerstoff/Inertgasgemisch (Argon,N₂) und/oder peroxidgruppenübertragende Verbindungen (z.B. H₂O₂) für den Abbau des Latex ein. Dieses Verfahren wirkt sich aber, wie alle chemischen Verfahren zum Abbau von Naturlatex, signifikant nachteilig auf das gummitechnische Wertebild der fertigen Kautschukmischungen aus: Das liegt darin begründet, daß die Molekulargewichtsverteilung des Kautschuks beim chemischen Abbau nicht derjenigen nach dem mechanischen Mastifikationsprozeß entspricht.

Zum Verständnis des mechanischen Abbaues der Polymerketten eines Kautschuks genügt folgende einfache Vorstellung: Die Ketten werden bei der scherenden Beanspruchung des Knetens, Walzens und Mischens zerrissen. Hierdurch entstehen Radikale, welche die Tendenz haben, wieder zu rekombinieren, was jedoch durch die Absättigung mit dem stabilen Biradikal Luftsauerstoff weitgehend verhindert wird.

Der mechanische Abbau ist besonders effektiv bei tiefen Temperaturen (negativer Temperaturkoeffizient), da die Möglichkeit, Scherenergie einzubringen und zum Zerreißen der Ketten zu nutzen, mit steigender Temperatur und zunehmender Plastizität des Materials immer geringer wird. Der mechanische Abbau bevorzugt den Zerriß der großen, im Mittel fester verhakten Moleküle, da die kleineren vergleichsweise leichter "durchrutschen".

Der oxidative Abbau hat hingegen als "normale" chemische Reaktion einen positiven Temperaturkoeffizienten, geht mit steigender Temperatur also schneller. Da der Ort der Bindungsspaltung nur von Stoßwahrscheinlichkeiten bestimmt wird, ist er in der Wahl der Makromoleküle nicht selektiv bezüglich der Kettenlänge der zu spaltenden Moleküle, sondern statistisch. Die Folge ist, daß der chemische Abbau des Naturlatex zu einer breiteren Molekulargewichtsverteilung mit größeren Anteilen kleinerer Kettenlängen führt im Vergleich zu dem mechanischen Prozeß auf der Walze oder im Kneter.

Aufgabe der Erfindung ist es, ein Verfahren zur Herstellung von feinteiligem Pulverkautschuk auf der Basis NR/Ruß bereitzustellen, bei dem man den chemischen Abbau des NR-Ausgangslatex vermeiden kann und trotzdem in den vulkanisierten Produkten ein mit mastifiziertem Ballenkautschuk hergestellten Produkten vergleichbares gummitechnisches Wertebild erzielt.

Die WO 99 664 beschreibt zwar ebenfalls die Herstellung von Pulverkautschuk auch auf Basis von Naturkautschuk. Die Reaktionsführung ist hier jedoch zur vorliegenden unterschiedlich.

Gegenstand der Erfindung ist ein Verfahren zur Herstellung feinteiliger, pulverförmiger und füllstoffhaltiger Kautschukpulver auf Basis eines weder chemisch noch mechanisch abgebauten Naturkautschuks und Ruß, das dadurch gekennzeichnet ist, daß man zunächst gemäß dem gewünschten Füllgrad eine feinteilige Rußsuspension in Wasser herstellt und dabei Suspensionsdichten zwischen 0,5 - 10 %, insbesondere 3 - 6 %, einstellt. In einer besonderen Ausführungsform werden dieser Rußsuspension oder dem den Kernruß enthaltenden Anteil 0,5 - 7 phr, insbesondere 2 - 4 phr, Zinkseifen in feinteiliger Form zugesetzt. Anschließend wird von der Rußsuspension Splittingruß 1 und Splittingruß 2 abgenommen. Übrig bleibt der Kernruß, der sich bei der späteren Fällung in das entstehende Korn einbaut. Diesem Rußanteil der zwischen 10 und 80 Gew.-% des gesamten Rußes einer Mischung ausmachen kann, sich aber bevorzugt auf mindestens 20 phr beläuft, werden im weiteren Verlauf der Fällung wasserlösliche Salze eines Metalls der Gruppen IIa, IIb, IIIa und VIII des periodischen Systems der Elemente in Mengen von 0,5-10 phr zugesetzt.

Diese Gruppeneinteilung entspricht der IUPAC-Empfehlung (siehe Periodisches System der Elemente, Verlag Chemie, Weinheim, 1985). Typische Vertreter sind sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums bevorzugt sind. Besonders bevorzugt sind Aluminiumsulfat und weitere Lewissäuren.

Gegebenenfalls wird der den Kernruß enthaltenden Suspension eine Alkalisilikatlösung in Mengen von 1 - 10 phr, insbesondere 2 - 5 phr, beigefügt. Die so hergestellte Füllstoffsuspension wird anschließend mit dem Kautschuklatex innig gemischt. Dazu eignen sich bekannte Rühraggregate, wie z.B. Propeller-Rührer. Nach dem Vermischen wird unter Aufrechterhaltung des Rührvorgangs mit Hilfe einer Säure, bevorzugt Schwefelsäure, der pH-Wert auf ca. 5 - 8 abgesenkt und gleichzeitig über eine Pumpe Splittingruß 1 zugefahren. Der Anteil dieses Rußes an der Gesamtrußmenge im Fertigprodukt liegt zwischen 10 und 70 Gew.-%. Anschließend wird durch weitere Säurezugabe der pH-Wert der Suspension auf
2,0 - < 5, bevorzugt 2,5 - 4,5, abgesenkt und anschließend nach einer Reaktionszeit von 5 - 120 min. Splittingruß 2 hinzugegeben. Splittingruß 2 dient der Abdeckung eventuell noch offener Latexbereiche auf dem Korn. Sein Anteil an der Gesamtmenge des eingesetzten Rußes beträgt 1 - 15 Gew.-%.

Die Füllstoffsuspension enthält im allgemeinen 0,5 bis 10 Gew.-%, bevorzugt 3 bis 6 Gew.-% Ruß, bezogen auf die Suspension.

Die Metallsalze erweisen sich als besonders geeignet, die Korngröße der ausgefällten Produkte in gewünschter Weise zu beeinflussen. Zur Einstellung des gewünschten pH-Wertes verwendet man gegebenenfalls zusätzlich Mineralsäure, wie z. B. Schwefelsäure, Phosphorsäure und Salzsäure, wobei die Schwefelsäure besonders bevorzugt ist. Eingesetzt werden können aber auch Carbonsäuren, wie z. B. Ameisen- und Essigsäure.

Das Kautschukpulver wird im allemeinen bei einer Temperatur zwischen 10 und 60°C gefällt, insbesondere bei einer Umgebungstemperatur von 20 bis 35°C.

Der Feststoffgehalt des eingesetzten NR-Latex beläuft sich im allgemeinen auf 15-60 %, bevorzugt zwischen 20-30%. Eine besonders geeignete Latexart des Latex stellt der sogenannte "field latex" dar, insbesondere field latex CV", dem zur Stabilisierung der Viskosität Hydroxylamin zugesetzt wurde.

Das erfindungsgemäße Verfahren kann sowohl diskontinuierlich als auch kontinuierlich durchgeführt werden. Das ausgefällte Kautschukpulver wird vorteilhaft mit Hilfe einer Zentrifuge oder eines Bandtrockners entwässert und anschließend auf einen Restwassergehalt < 3 % getrocknet, insbesondere in einem Wirbelbetttrockner.

Bei den eingesetzten Rußen handelt es sich um die allgemein in der Kautschukverarbeitung verwendeten Produkte. Dazu gehören Furnaceruße, Gas- und Flammruße mit einer Jodzahl von 5-1000 m²/g, einer CTAB-Zahl von 15 - 600 m²/g, einer DBP-Adsorption von 30 bis 400 ml/100g und einer 24 M4 DBP-Zahl von 50 -370ml/100g.

In einer besonderen Ausführungsform enthalten die erfindungsgemäßen Produkte Ruße gemäß der Anmeldung DE 198 40 663 mit gegenüber Standardrußen verbesserten dynamischen Eigenschaften.

Die erfindungsgemäß hergestellten Kautschukpulver besitzen einen Füllstoffgehalt (Ruß) von 30 bis 250 phr, insbesondere 45 bis 75 phr.

Das Pulver ist freifließend und hat eine Teilchengrößenverteilung von 300 pm bis 5 mm, insbesondere 500 µm bis 2 mm.

In einer bevorzugter Ausführungsform enthalten sie 0,5 bis 7 phr, insbesondere 1 bis 4 phr an Zinkseifen.

Mit Hilfe des erfindungsgemäßen Verfahrens gelingt es, ausgehend von unabgebautem NR-Latex auch mit hoher Anfangsviskosität, insbesondere unter Verwendung geeigneter Zusatzstoffe einen Pulverkautschuk auf Basis NR/Ruß herzustellen, der im Verarbeitungsverhalten einem bereits mechanisch abgebauten, d.h. mastifizierten NR-Ballens entspricht und damit energieaufwendige Mischstufen einspart.

Bei den Zusatzstoffen handelt es sich um sich bekannte Zinkseifen, wie sie z.B. durch Struktol unter der Bezeichnung A 50 P, A 50 L, A 60 und EF 44 vertrieben werden. Die Verbindungen können entweder während der Mischungsherstellung im Kneter oder auf der Walze zum Pulverkautschuk hinzugegeben werden. Eine besonders hohe Effektivität zeigen die Produkte, wenn man sie während der Pulverkautschukherstellung, am besten der Rußsuspension zusetzt. Dabei kann es sich um die Dispersion handeln, die die Gesamtmenge an Ruß enthält, oder auch den Anteil der Suspension, die den Kernruß enthält.

Die nachfolgende Tabelle zeigt einen Vergleich zwischen dem üblichen Mischprozeß zur Herstellung einer LKW-Laufflächenmischung auf Basis NR/Ruß aus Ballenkautschuk und Pulverkautschuk (PK).

**Tabelle 1:**

| Anzahl der üblichen Mischstufen bei konv. und PK-Mischweise | | | |
|---|---|---|---|
| Mischstufe | Grund | Konventionelle Mischweise (NR-Ballen) Anzahl der Stufen | PK- Mischweise Anzahl der Stufen |
| Mastikation | Reduzierung der hohen Anfangsviskosität des NR-Ballens | 1 | entfällt |
| Vorstufe | Einarbeitung von Füllstoff, Öl und Kleinchemikali en Dispersion des Füllstoffs | 2 | entfällt weitgehend¹ |
| Remill-Stufe | Verbesserung der Dispersion | 3 | entfällt |
| Aufmischstufe | Vernetzungschemikalien | 4 | 1 |

| | | | |
|---|---|---|---|
| ¹ keine Einarbeitung von Füllstoff etc. und keine Dispersion des Füllstoffs | | | |

Naturkautschuk zeichnet sich gegenüber den meisten synthetisch hergestellten Kautschukarten durch seine hohe Eigenklebrigkeit (tack) aus. Diese führt dazu, daß Naturkautschuk z.B. in der Klebeindustrie (z.B. Tesa) eingesetzt wird oder Anwendung als Tackifier findet, um die Haftung zwischen den einzelnen Reifenbauteilen eines Rohlings (unvulkanisierter Reifen) zu erhöhen.

Die hier gewünschten positiven Eigenschaften der Klebrigkeit haben natürlich bei der Herstellung von NR/Ruß-Pulvern nach dem Stand der Technik große Probleme aufgeworfen. Mit dem erfindungsgemäßen Verfahren gelingt es erstmals, ein freifließendes Material mit guter Förder- und Silierbarkeit herzustellen.

Während des Herstellverfahrens können den erfindungsgemäßen Kautschukpulvern weitere Verarbeitungs- und/oder übliche Mischungsbestandteile in gummitechnisch üblicher Dosierung beigemischt werden.

Bevorzugt enthalten die Produkte jedoch nur NR Rußfüllstoff und die genannten Zinkseifen. Die restlichen Mischungsbestandteile können wie üblich während der Mischungsherstellung z.B. im Kneter, auf der Walze oder im Extruder zugeführt werden.

Die so hergestellten Kautschukpulver werden zur Herstellung von vulkanisierbaren Kautschukmischungen verwendet. Sie fallen als freifließende Pulver an, die auch unter mechanischer Beanspruchung rieselfähig bleiben.

Durch den Einsatz dieser Produkte speziell auf Basis NR/Ruß lassen sich Mischstufen und Mischenergie einsparen und gleichzeitig Vulkanisate mit verbesserten Eigenschaften entwickeln.

### Beispiele

### A) Eingesetzte Rohstoffe

### 1) Herstellung

- Struktol EF 44: Gemisch verschiedener Zinkseifenderivate der Firma Struktol
- Corax N 234: Furnaceruß der Degussa-Hüls mit einer J₂-Adsorbtion von 120 mg/g
- NR-Latex: Neotec 60 der Firma Weber und Schaer mit einer Mooney-Viskosität von ML 1+4 99. Der Latex liegt 60%ig in Wasser vor und wird vor Einsatz im PK-Prozeß auf 20% verdünnt.

### 2) Herstellung

- SMR 10: Standard Malaysian Rubber; Naturkautschuk
- 6PPD: N-(1,3-Dimethylbutyl)-N'-phenyl-p-phenylendiamin
- TMQ: 2,2,4-Trimethyl-1,2-dihydrochinolin
- TBBS: N-tert.Butyl-2-benzthiazylsulfenamid
- CTP: N-Cyclohexylthiophthalimid

### B) Gummitechnische Prüfmethoden

- Mooney - Viskosität: DIN 53 523 / 3
- Zugversuch am Stab: DIN 53 504
- Shore Härte: DIN 53 505
- Weiterreißwiderstand: DIN 53 507
- Abrieb: DIN 53 516
- Dispersion (Philips): ISO/DIS 11 345
- Dispersion (Rauhigkeit): DIN 4788
- Bruchdehnung: DIN 53 504
- Bruchenergie: DIN 53 504
- Viskoelastische Eigenschaften: DIN 53 513

### Beispiel 1

### Vergleich von mechanisch und chemisch abgebautem Naturkautschuk

**Tab. 2 :**

| Vergleich des gummitechnischen Wertebildes eines mechanisch und eines chemisch abgebauten Naturkautschuks | | | |
|---|---|---|---|
| | | **Ballen (NR/50phr N234)** | **PK**_{**c**} **(NR/50phr N234)** |
| ML 1+4 (2 Stufe) | [-] | 63 | 63 |
| Dₘₐₓ-Dₘᵢₙ | [Nm] | 14,8 | 12,2 |
| Zugfestigkeit | [MPa] | 24,6 | 18,0 |
| Modul 300% | [MPa] | 12,2 | 10,5 |
| Shore Härte | [-] | 66 | 64 |
| Ball Rebound | [%] | 59,7 | 57,6 |

Vergleicht man das gummitechnische Wertebild beider Darreichungsformen (Ballen bzw. PK auf der Basis eines chemisch abgebauten Latex) bei gleicher Mischungszusammensetzung und Mischweise, insbesondere gleicher Mischzeit, lassen sich folgende Resultate beobachten.

Bei nahezu identischer Mooney-Viskosität erkennt man einen deutlichen Abfall in der Vernetzungsausbeute (Dₘₐₓ-Dₘᵢₙ) in den Festigkeitswerten sowie im Modul. Sämtliche Beobachtungen lassen sich auf die unterschiedliche Kettenlängenverteilung des chemisch abgebauten NR-Latex im Pulverkautschuk zurückführen. Dies bedeutet nach dem Stand der Technik, daß zum Erreichen eines dem mastifizierten Ballenkautschuk vergleichbaren Wertebildes beim Pulverkautschuk NR-Ausgangslatex chemisch nicht abgebaut werden darf. Um den Vorteil des pulverförmigen Materials im Hinblick auf eine leichtere und energiesparendere Verarbeitung nutzen zu können, dürfen die Mischzeiten im Vergleich zur Ballentechnologie nicht verlängert werden. Dies wird erfindungsgemäß erreicht.

### Beispiel 2

### Herstellung eines Pulverkautschuks auf Basis (ML 1+4 = 99) und Corax N234 (50phr)

Unter Rühren wird eine ca. 5%ige Rußsuspension aus 18,4 kg Corax N234 und 330L Wasser hergestellt, aus der ein Anteil von 7,5kg Ruß in Wasser (Splitting 1) sowie 2 kg Ruß in 38L Wasser (Splitting 2) abgenommen werden. Dann werden zum Hauptruß (Kernruß) 0,84 kg EF 44 (Zinkseifen) hinzugegeben und intensiv homogenisiert. Zusätzlich enthält die Suspension des Hauptrußes 4,5 kg einer 26,5%igen Wasserglaslösung, 9,7kg Schwefelsäure (10%ig) und 2,4 kg Al₂(SO₄) - Lösung (10%ig).

Die so hergestellte Rußsuspension wird mit 200 kg einer 20%igen NR-Latex-Emulsion vermischt. Unter gleichzeitiger Zugabe von Schwefelsäure und Splitting 1 wird ein pH-Wert von 7,2 eingestellt.

Anschließend wird durch weitere Zugabe von H₂SO₄ der pH-Wert auf 4 abgesenkt und nach einer Reifezeit von 30 Minuten Splitting 2 zugesetzt.

Anschließend erfolgt eine Fest/Flüssigtrennung und Trocknung des Produktes auf eine Restfeuchte < 3%. Das NR/N234 (PR I) - haltige Kautschukpulver fällt freifließend an und verklebt auch bei der anschließenden Lagerung nicht.

### Anwendungsbeispiel

Vergleich des gummitechnischen Wertebildes des erfindungsgemäßen Produktes (Herstellbeispiel 1) gegen eine Standardmischung

### a) Rezeptur

| | 1 | 2 |
|---|---|---|
| SMR 10 (ML 1+4 70-80) | 100 | - |
| PR I* | - | 150 |
| N 234 | 50 | - |
| 6PPD | 1,5 | 1,5 |
| TMQ | 1,5 | 1,5 |
| ZnO RS | 4 | 4 |
| Stearinsäure | 2 | 2 |
| Wachs | 1 | 1 |
| TBBS | 1 | 1 |
| CTP | 0,15 | 0,15 |
| Schwefel | 1,4 | 1,4 |

| | | |
|---|---|---|
| *100 Teile NR-Latex, 47 Teile N234 Fluffy, 2 Teile Struktol EF 44 | | |

### b) Mischvorschrift

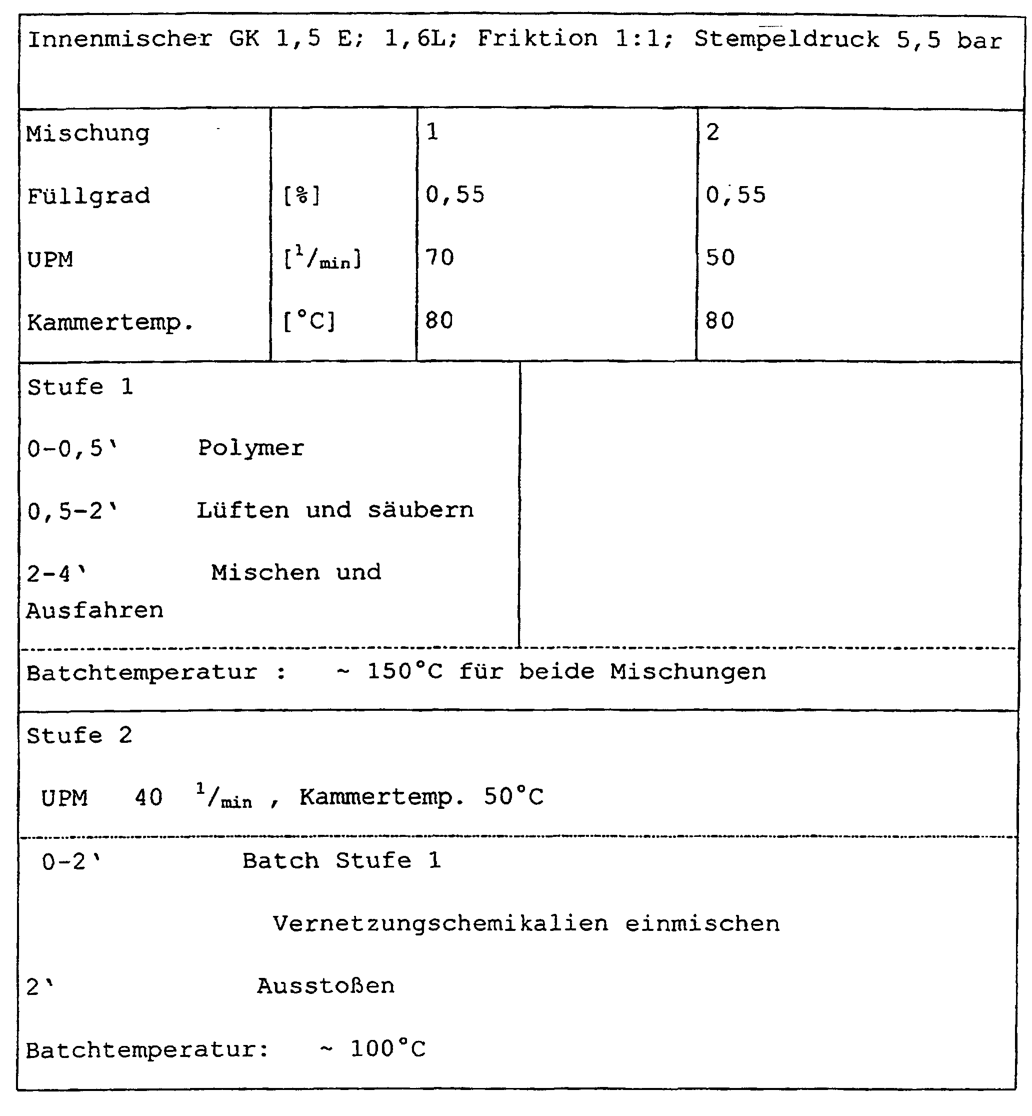

### c) Gummitechnische Eigenschaften

| Mischungsnummer | | 1 | 2 |
|---|---|---|---|
| Rohmischungsdaten | | | |
| ML (1+4) 100°C | [-] | 67 | 71 |
| MSₜ₅ | [min] | 18,2 | 19,3 |
| MSₜ₃₅ | [min] | 22, 6 | 25,1 |

| Vulkameterprüfung | | | |
|---|---|---|---|
| Dₘₐₓ-Dₘᵢₙ | [Nm] | 15,6 | 15,2 |
| t_{10%} | [min] | 4,4 | 4,6 |
| t_{90%} | [min] | 9,8 | 11,9 |

| **Vulkanisatdaten** | | | |
|---|---|---|---|
| Zugfestigkeit | [MPa] | 24,9 | 28,0 |
| Modul 300% | [MPa] | 11,4 | 13,0 |
| Bruchdehnung | [%] | 510 | 540 |
| Bruchenergie | [J] | 171 | 211 |
| Shore A Härte | [-] | 64 | 65 |
| Weiterreißwiderstand | [N/mm] | 32 | 35 |
| DIN Abrieb | [mm³] | 98 | 96 |
| E' 0°C | [MPa] | 11,8 | 12,8 |
| E" 0°C | [MPa] | 2,9 | 3,2 |
| tan δ 0°C | [-] | 0,249 | 0,262 |
| E' 60°C | [MPa] | 7,4 | 8,0 |
| E'' 60°C | [MPa] | 1,0 | 1,0 |
| tan δ 60°C | [-] | 0,133 | 0,120 |

| **Dispersion** | | | |
|---|---|---|---|
| Phillips | [-] | 7 | 8 |

Das erfindungsgemäße Produkt zeichnet sich aus durch eine höhere Zugfestigkeit, einen besseren Modul 300%, höhere Bruchenergie, bessere dynamische Daten sowie eine bessere Dispersion.

## Patentansprüche

1. Verfahren zur Herstellung feinteiliger Kautschuke (Kautschukpulver) auf Basis eines weder chemisch noch mechanisch abgebautem Naturkautschuks durch Ausfällen aus wasserhaltigen Mischungen, die Ruß in Form von Suspensionen, wasserlösliche Salze eines Metalls der Gruppen II a, II b, III a oder VIII des periodischen Systems der Elemente und einen wässrigen Kautschuklatex enthalten,
**dadurch gekennzeichnet,**
**daß** man
a) eine 0,5 bis 10 Gew.-% Ruß enthaltende Suspension in Wasser herstellt und die Rußmenge derjenigen entspricht, die in den Kautschuk insgesamt eingearbeitet wird,
b) diese Suspension in drei Partien aufteilt, wovon die erste 10 bis 80 % (Kernruß) die zweite 10 bis 70 % (Splittingruß 1) und die dritte 1 bis 15 % (Splittingruß 2) der in der gesamten Suspension enthaltenen Rußmenge enthält,
c) die erste Partie mit 0,5 bis 10 phr eines wasserlöslichen Salzes eines Metalls der Gruppen II a, II b, III a oder VIII, insbesondere Al₂(SO₄)₃, versetzt,
d) das Gemisch gemäß c) anschließend mit dem Kautschuklatex innig vermischt und unter weiterem Rühren
e) den pH-Wert auf 5 bis 8 absenkt und bevorzugt gleichzeitig die zweite Partie Ruß (Splittingruß 1) zudosiert,
f) anschließend durch Zugabe weiterer Säure, insbesondere Schwefelsäure, den pH-Wert auf 2,0 bis < 5, bevorzugt 2,5 bis 4,5, absenkt,
g) nach einer Reaktionszeit von 5 bis 20 min. die dritte Partie Ruß (Splittingruß 2) zusetzt,
h) den ausgefallenen Feststoff abtrennt,
i) ihn bevorzugt wäscht und
j) trocknet.

2. Verfahren gemäß Anspruch 1,
**dadurch gekennzeichnet,**
**daß** man die Fällung des Kautschukpulvers in Gegenwart von 0,5 bis 7 phr Zinkseifen durchführt.

3. Verfahren gemäß Anspruch 1,
**dadurch gekennzeichnet,**
**daß** man der Rußsuspension vor dem Aufteilen 0,5 bis 7 phr Zinkseifen zusetzt.

4. Verfahren gemäß Anspruch 1,
**dadurch gekennzeichnet,**
**daß** man der den Kernruß enthaltenden Suspension eine Alkalisilikatlösung in einer Menge von 1 bis 10 phr, insbesondere 2 bis 5 phr zusetzt.

## Claims

1. A process, starting from a natural rubber which has not been chemically or mechanically degraded, for producing fine-particle rubbers (rubber powders), via precipitation from aqueous mixtures which contain carbon black in the form of suspensions and contain water-soluble salts of a metal of groups II a, II b, III a or VIII of the Periodic Table of the Elements and contain an aqueous rubber latex,
**characterized in that**
a) a suspension containing from 0.5 to 10% by weight of carbon black in water is prepared, the amount of carbon black corresponding to the total amount which is incorporated into the rubber,
b) this suspension is divided into three parts, of which the first contains from 10 to 80% (core black)
the second contains from 10 to 70% (splitting black 1) and
the third contains from 1 to 15% (splitting black 2) of the entire amount of carbon black present in the suspension,
c) the first part is treated with from 0.5 to 10 phr of a water-soluble salt of a metal of groups II a, II b, III a or VIII, in particular Al₂ (SO₄)₃,
d) the mixture according to c) is then intimately mixed with the rubber latex and, with continued stirring,
e) the pH is lowered to 5 - 8 and preferably simultaneously the second part of carbon black (splitting black 1) is metered in,
f) then the pH is lowered to 2.0 - < 5, preferably 2.5 - 4.5, by addition of further acid, in particular sulphuric acid,
g) after a reaction time of from 5 to 20 min., the third part of carbon black (splitting black 2) is added,
h) the precipitated solid is isolated,
i) and is preferably washed and
j) dried.

2. A process according to claim 1,
**characterized in that**
the precipitation of the rubber powder is carried out in the presence of from 0.5 to 7 phr of zinc soaps.

3. A process according to claim 1,
**characterized in that**
from 0.5 to 7 phr of zinc soaps is added to the carbon black suspension prior to division.

4. A process according to claim 1,
**characterized in that**
an amount of from 1 to 10 phr, in particular from 2 to 5 phr, of an alkali metal silicate solution is added to the suspension containing the core black.

## Revendications

1. Procédé pour la préparation de caoutchouc à particules fines (poudre de caoutchouc) à base de caoutchouc naturel constitué ni de manière chimique, ni de manière mécanique par des précipitations de mélanges aqueux, qui contiennent du noir de carbone sous forme de suspensions, des sels solubles dans l'eau d'un métal des groupes II a, II b, III a ou VIII du système périodique des éléments et un latex de caoutchouc aqueux,
**caractérisé en ce que**
a) on produit dans l'eau une suspension contenant 0,5 % à 10 % en poids de noir de carbone et la quantité de noir de carbone correspond à celle introduite globalement dans le caoutchouc,
b) on divise cette suspension en trois parties dont
la première contient 10 à 80 % (noir de carbone nucléaire),
la seconde 10 à 70 % (noir de carbone en éclats 1) et
la troisième 1 à 15 % (noir de carbone en éclats 2) de la quantité de noir de carbone contenue dans l'ensemble de la suspension,
c) on mélange la première partie avec 0,5 à 10 pcc (parties pour cent parties de caoutchouc) d'un sel soluble dans l'eau d'un métal des groupes II a, II b, III a ou VIII, en particulier Al₂(SO₄)₃,
d) on mélange ensuite intimement le mélange conformément au point c) avec le latex de caoutchouc et en continuant à remuer
e) on fait descendre le pH à une valeur de 5 à 8 et, de préférence, en même temps on procède à une addition dosée de la seconde partie de noir de carbone (noir de carbone en éclats 1),
f) on fait ensuite descendre la valeur du pH à 2,0 jusqu'à < 5, de préférence, de 2,5 à 4,5, par l'ajout d'un autre acide, en particulier, l'acide sulfurique,
g) on ajoute après un temps de réaction de 5 à 20 minutes, la troisième partie de noir de carbone (noir de carbone en éclats 2),
h) on sépare les solides tombés,
i) on les lave de préférence et
j) on les sèche.

2. Procédé selon la revendication 1,
**caractérisé en ce que**
l'on réalise la précipitation de la poudre de caoutchouc en présence de 0,5 à 7 pcc (parties pour cent parties de caoutchouc) de savon de zinc.

3. Procédé selon la revendication 1,
**caractérisé en ce que**
l'on ajoute à la suspension de noir de carbone, avant la division, 0,5 à 7 pcc (parties pour cent parties de caoutchouc) de savon de zinc.

4. Procédé selon la revendication 1,
**caractérisé en ce que**
l'on ajoute à la suspension contenant le noir de carbone nucléaire une solution de silicate alcalin en une quantité de 1 à 10 pcc (parties pour cent parties de caoutchouc), en particulier, 2 à 5 pcc (parties pour cent parties de caoutchouc).
